# EUROPEAN PATENT APPLICATION

(11) **EP 2 631 557 A1**
(43) Date of publication of application: **28.08.2013**
(21) Application number: 10812982.6
(22) Date of filing: 18.10.2010
(51) Int. Cl.: F24J 2/14

(54) **SUPPORT STRUCTURE OF MIRRORS OR REFLECTORS FOR SOLAR CONCENTRATION SYSTEMS AND METHOD FOR INSTALLING THE MIRRORS ON THE STRUCTURE**

(71) Applicant: Renovalia Energy, S.A., 28006 Madrid (ES)
(72) Inventor: ORTEGA MARTINEZ, Juan Domingo, E-28006 Madrid (ES)
(74) Representative: Elosegui de la Pena, Inigo
(86) International application number: PCT/ES2010/070666
(87) International publication number: WO 2012/052570

(57) **Abstract**

Support structure having some frames characterized in that each of the frames (1), has an upper profile or a profile in contact with the reflector mirrors of a concentrator, which is a profile with a curvature equal to the mirror curvature, further having on said upper profile (2) some means for fixing the mirrors before gluing them, which hinder the movement of the mirrors. The mirrors are glued on the frames by using a silicone cord applied at the bottom. Due to this structure it is achieved that concentrators are easier to install and calibrate and which ensure very high accuracy, with practically no deviations in the reflection of light on the spot for concentrating the reflected light.

## Description

### OBJECT OF THE INVENTION

The present invention, as indicated in the title of the invention, is a mirror support structure for solar concentrator systems and the process for assembling the mirrors on said structure.

A solar concentrator aims to concentrate the solar radiation received by the concentrator capturing area at a point where a receiver that receives concentrated solar energy, previously reflected by a series of reflector mirrors disposed on the capturing area, is disposed.

Another object of the present invention is the process for assembling the mirrors on the structure such as that object of the invention.

The present invention is characterised in that each of the frames that form part of the concentrator structure have a special configuration and design, achieving a concentrator system that is easy to manufacture and assemble, and which ensures high structural stability without deviating the light reflected by the mirrors onto the concentration point.

Therefore, the present invention falls within the sphere of solar capture system support structures and, more specifically, within the referred concentrator systems.

### BACKGROUND OF THE INVENTION

Several structures that make up a capturing surface whereon reflector mirrors are disposed are known to exist in the state of the art. In general, these structures are formed either by screwed and/or welded lattices composed of straight profiles or by a series of ribs or radial frames which extend outwards from a central point to form a series of elements which, disposed radially, are used to support and fix the mirrors.

The solar reflector mirrors disposed on the capturing structure must be fixed and installed with very high position accuracy, as the slightest deviation in the final position with respect to the ideal position would produced a loss of concentration, as the reflected light ray could even fall outside of the receiver surface.

Any of the receiver elements on the market can be used, from tubes for heating fluids to systems with Stirling turbines or engines to photovoltaic cells. The uniformity and homogeneity of the light concentrated on the receiver is essential, as otherwise it would cause thermal stress on the parts whereon concentrated light falls or a very high loss of efficiency.

In general, the ribs or frames used to fix and support the reflector mirrors are made of sheets or plates of galvanised steel or similar material, the surface of which is folded using a folding machine or by means of stamping, defining a support surface. A series of bores are made in this support flap, whereon each of the mirror pieces that form the capturing surface are fixed by means of screws, to which end the mirror pieces must have a part acting as a nut whereinto a screw is threaded or a part acting as a threaded rod glued to the rear thereof.

Given that concentrator system mirrors are screwed to the support structure and as the mirrors are manufactured from mirrored and curved glass or from reflecting sheets adhered to substrates made of plastic, metal or other materials that form the curvature of the concentrator, a face must be formed more or less parallel to the surface of the mirrors having bores for fixing the screws/nuts for fixing the mirror.

Further, the curved mirrors, due to their own weight and to the action of the wind hitting against the surface thereof, exert a torque with respect to the anchoring point of the support elements of the mirrors, requiring the support structure to be highly resistant. This problem has been solved adopting one of the following solutions:
a) The use of screwed or welded lattices composed of straight profiles with high-precision support points where the mirrors are screwed.
b) The use of stamped frames or ribs having a fold in the material to form the surface parallel to the reflector. This fold has several bores whereinto the mirrors requiring high-precision stamping are screwed.

Moreover, the most common mirror available on the market is glass, the fixation of which using screws/nut requires gluing a nut/rod for fixing the mirror to the structure.

This system for fixing and assembling the concentrator mirrors on the support structures gives rise to a large number of misalignments or imbalances, as well as several aspects susceptible of improvement.
- On the one hand, the necessary handling of the mirrors to equip them with nuts/screws for fixation thereof.
- On the other, the complexity of the support structures, particularly having to provide them with a surface for supporting and fixing the mirrors, obtained by means of stamping, giving rise to misalignments.
- It is also more expensive due to the use of screws and the laborious manufacturing process.
- Additionally, the use of screws for fixing screws can give rise to misalignments and stress on the mirror pieces.

Other ways of fixing the mirror pieces have been developed, arranging or embedding these on a surface by means of gluing, which can give rise to deviations in solar reflectance as it depends on the quality of the glue applied and the pressure exerted.

Therefore, as explained earlier, the materials and processes for fixing the mirror pieces to the parabolic troughs can give rise to misalignments and imbalances and, consequently, the object of the present invention includes both a mirror or reflector support structure for solar concentrator systems and the necessary process for overcoming the aforementioned drawbacks.

### DESCRIPTION OF THE INVENTION

The object of the invention is a mirror or reflector support structure for solar concentrator systems and the process for assembling the mirrors that compose the solar concentrator capturing surface on the frames that make up the support structure.

The mirror or reflector support surface is formed by a series of frames or ribs for assembling solar concentrators of varying configurations, which can range from parabolic trough collectors to parabolic dishes or tower heliostats.

As explained earlier, all of these solar concentrator systems are basically made up of a series of stamped frames or by a series of lattices. In the case of the stamped frames, these require cutting and subsequent folding of at least one their edges to define a support surface on which to fix the solar receiver mirrors.

The essential characteristic of the frames is a surface that accurately reproduces the curvature of the mirrors whereupon they rest directly without need for using screws as means for fixing the frame or structure to the mirror.

Further, this support surface is reproduced throughout the curve that defines the mirror, so that the mirror rests uniformly along the length of the frame, in such a manner as to eliminate the stresses and deviations exerted on the mirrors, due to the absence of specific points of fixation thereof to the structure as in the case of the screws.

The methods for cutting the upper profile of the frames can range from laser cutting to water jet cutting, oxy-cutting, stamping, etc.

In addition, optionally, with the object of achieving fixation of the reflector mirrors to the support profile during the gluing process, the frames may have means for fixing the position of the mirrors during the gluing process, which serve to fix the reflector mirrors in place, preventing the mirrors from moving on the frame profile.

Further, the frames can optionally have folds on the profile opposite the profile that supports the mirrors which defines a flap or horizontal surface having bores for fixing the ends of possible strips that join the frames. These folds give the frames greater rigidity as well as serving as a means for fixing the strips that join the frames.

At one of their ends, the frames have joining means for fixing each of the frames to a central support and fixation structure.

A possible process for assembling the reflector mirrors of the concentrator on the frames includes the following stages or processes:
- Firstly, a central support is assembled.
- Next, the frames are fixed in such a manner that the upper support profile of the mirrors remains on the upper part, facilitating the subsequent arrangement of the reflector mirrors. The frames are fixed using a mould which, disposed at the free end thereof, indicates the correct position of the frames, and screwing of the fixation end.
- Once all the frames have been assembled, in a possible embodiment, these are joined together using a series of joining strips, which are fixed to folds or flaps of the frames.
- Once the support surface of the mirrors has been defined, the mirrors are disposed in such a manner as to rest upon the upper profile of the frames, having means of fixing the mirrors prior to gluing.
- Next, the mirrors are fixed by means of gluing to the lower part of the parabolic trough structure, which in a possible embodiment could be a silicone bead applied to the angle formed between the upper edge of the frames and the lower face of the mirrors. The fixing silicone is applied so as to not exert any force whatsoever on the mirrors, thereby avoiding movement thereof once fixed.

The characteristics of both the frames of the solar concentrator and the characteristics of the construction process give rise to a concentrator that is easy to assembly, easy to calibrate and which ensures very high accuracy, with practically no deviations in the light reflected on the concentration point of the solar concentrator.

In particular, the improvements achieved with respect to already known systems are:
- On one hand, the mirrors are glued directly to the structure without using screws/nuts, with the ensuing savings in labour and materials.
- Consequently, it is no longer necessary to create a surface for supporting and fixing the mirrors that is parallel to the surface of the mirrors.
- Therefore, the frames are built using an upper profile or edge that reproduces exactly the desired mirror curvature.
- The generation of a certain curvature can be carried out using a multiplicity of industrial methods requiring little investment in tools, such as for example, water jet cutting, laser cutting, oxy-cutting, etc., achieving high accuracy in all cases. This option is appropriate in the case of shorter production processes.
- If a stamping method is used in the case of longer production processes, the tools used are simplified, as the material only needs to be cut along the critical zone, and does not require cutting, boring and finally folding.
- On the other hand, in the case of using glass as the material of the mirrors, gluing of screws or nuts is not necessary, thereby simplifying the manufacturing process. This simplifies and optimises the process of transporting the mirrors, as well as eliminating the cost of using nuts and screws.

### EXPLANATION OF THE DRAWINGS

In order to complement the description made below and with the object of helping to better understand its characteristics, the present specification is accompanied by a set of drawings, the figures of which represent the most significant details of the invention.

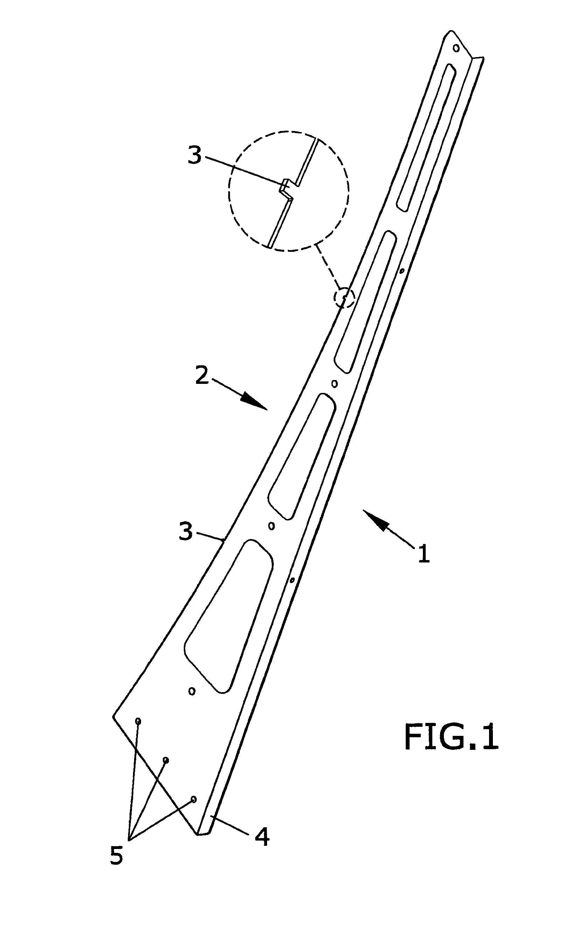

Fig. 1 shows a perspective view of a parabolic trough frame.

### PREFERRED EMBODIMENT OF THE INVENTION

In light of the figures, a preferred embodiment of the proposed invention is described below.

Figure 1 shows the construction characteristics of each of the frames (1), wherein it can be observed that they have an essentially triangular shape, although this aspect is non-limiting, as the essential characteristic is that the upper profile (2) or profile that is in contact with the reflector mirrors constitute a support surface having a profile with a curvature equal to that of the mirrors along the length thereof, which can be obtained by means of die or laser cutting.

Means of fixing the position of the mirrors during the gluing process are disposed on said profile (2), which in a possible non-limiting embodiment can consist of one or several projecting studs (3), which act as butts in the arrangement of the mirrors; on one of the sides it has a series of bores (5) that serve to fix the frames to the concentrator structure; and, lastly, on the edge opposite that of the support profile (2) there is an edge with a fold (4) that defines a surface having a series of bores whereon to fix the ends of the sections of a strip that joins the frames together (1).

Variations in materials, shape, size and arrangement of the constituent elements, described in a non-limiting manner, do not alter the essentiality of this invention, being sufficient for reproduction thereof by a person skilled in the art.

## Claims

1. Mirror or reflector support structure for solar concentrator systems formed by a series of frames, **characterised in that** each of the frames has a shape such that it has an upper profile (2) or profile for supporting one of the reflector mirrors, which define a support surface with a profile having a curvature equal to that of the mirrors along the length thereof.

2. Mirror or reflector support structure for solar concentrator systems, according to claim 1, **characterised in that** means for fixing the position of the mirrors during the gluing process are disposed on the upper profile (2) of the frames.

3. Mirror or reflector support structure for solar concentrator systems, according to claim 2, **characterised in that** the means for fixing the position of the mirrors during the gluing process consist of one or several studs (3) projecting from the upper profile (2) or support profile of the mirrors, which act as butts in the arrangement of the mirrors.

4. Mirror or reflector support structure for solar concentrator systems, according to claim 1, **characterised in that** the frame (1), on one of its sides, has a series of bores (5) that serve to fix the frames.

5. Mirror or reflector support structure for solar concentrator systems, according to claim 1, **characterised in that** there is an edge with a fold (4) on the edge opposite the support profile (2), in such a manner that it defines a surface having a series of bores.

6. Mirror or reflector support structure for solar concentrator systems, according to claim 1, **characterised in that** the creation of the upper profile (2) or support profile of the mirrors is obtained by means of water jet cutting, laser cutting, oxy-cutting, stamping, etc.

7. Process for assembling reflector mirrors on the previously claimed support structure, **characterised in that** it has the following stages or processes:
- Firstly, a central support is assembled.
- Next, the frames are fixed in such a manner that the upper support profile of the mirrors remains on the upper part, facilitating the subsequent assembly of the reflector mirrors.
- Once the support surface of the mirrors has been defined, the mirrors are disposed on the frames in such a manner as to rest upon the upper profile of the frames, in contact with means for fixing the mirrors prior to gluing. The mirrors are disposed in such a manner that the edges of the mirrors do not rest on the frames, but rather the frames remain within the edges of the mirrors. The mirrors are previously cut and separated therebetween a predefined distance of a few mm.
- Next, the mirrors are fixed to the frames by means of gluing to the lower part of the parabolic trough structure.

8. Process for assembling reflector mirrors on the support structure, according to claim 7, **characterised in that** the frames are fixed to the central support by means of a mould which, disposed at the free end thereof, indicates the correct position of the frames, whereupon screwing of the fixation end is carried out.

9. Process for assembling reflector mirrors on the support structure, according to claim 7, **characterised in that** the mirrors are glued to the frames by means of a silicone bead which is applied in the angle defined between the upper edge of the frames and the lower face of the mirrors, said application of fixing silicone being carried out in such as manner that no force is exerted on the mirrors whatsoever, thereby preventing movement thereof once fixed in place.
